# EUROPEAN PATENT APPLICATION

(11) **EP 4 610 557 A1**
(43) Date of publication of application: **03.09.2025**
(21) Application number: 25160462.5
(22) Date of filing: 27.02.2025
(51) Int. Cl.: F21V 5/00, F21V 5/04, F21V 14/06, F21W 131/406, F21Y 105/18, F21Y 115/10

(54) **ZOOM SYSTEM FOR A WASH LIGHT**

(30) Priority: 01.03.2024 US 202418593600
(71) Applicant: ROBE lighting s.r.o., 75661 Roznov pod Radhostem (CZ)
(72) Inventor: David, Tomas, 756 44 Podoli (CZ); Vilem, Jan, 757 01 Valasske Mezirici (CZ); Micunek, Tomas, 756 61 Roznov pod Radhostem (CZ); Valchar, Josef, 756 56 Prostredni Becva (CZ)
(74) Representative: Murgitroyd & Company

(57) **Abstract**

An optical system comprising:

a light source (104,105), configured to emit one or more substantially parallel light beams;

a zoom lens module (315) optically coupled to the light source, the zoom lens module comprising:

a converging lens (314), configured to receive the one or more substantially parallel light beams emitted by the light source and to emit a converging light beam; and

a tubular light spill shield (317) having a back end adjacent to a front surface of the converging lens and a front end comprising an aperture (316), the aperture located adjacent to a focus of the converging lens, the tubular light spill shield configured to pass the converging light beam,

wherein the converging lens and the tubular light spill shield are fixedly coupled to the zoom lens module; and

a positive power optical device (120) configured to receive the converging light beam and to emit an output light beam (122) from the optical system,

wherein the light source and the positive power optical device are mounted in fixed positions in the optical system and the zoom lens module is configured to move along an optical axis (121) of the optical system between the light source and the positive power optical device.

## Description

### TECHNICAL FIELD OF THE DISCLOSURE

The disclosure generally relates to automated luminaires, and more specifically to a zoom system for use in an automated wash light luminaire.

### BACKGROUND

Luminaires with both manual and automated remotely controllable functionality are well known in the entertainment and architectural lighting markets. Such products are commonly used in theatres, television studios, concerts, theme parks, night clubs, and other venues. A typical automated luminaire provides control, from a remote location, of the output intensity, color, and other functions of the luminaire, and may allow an operator to control such functions for many luminaires simultaneously. Many automated luminaires additionally or alternatively provide control from the remote location of other parameters such as position, focus, zoom, beam size, beam shape, and/or beam pattern of light beam(s) emitted from the luminaire. A wash light is a type of luminaire which provides a soft edged light output typically used to illuminate performers and scenery.

### BRIEF DESCRIPTION OF THE DRAWINGS

For a more complete understanding of the present disclosure and the advantages thereof, reference is now made to the following description taken in conjunction with the accompanying drawings in which like reference numerals indicate like features and wherein:
Figure 1 presents a schematic view of a first optical system according to the disclosure.
Figures 2A, 2B, and 2C present schematic views illustrating the zoom functionality of the optical system of Figure 1.
Figure 3 presents a second optical system according to the disclosure.
Figure 4 presents a third optical system according to the disclosure.
Figure 5 presents a fourth optical system according to the disclosure.
Figure 6 presents an exploded diagram of a fifth optical system according to the disclosure.
Figure 7 presents a view of a luminaire according to the disclosure.

### SUMMARY

In a first embodiment, an optical system includes a light source, a zoom lens module, and a positive power optical device configured to emit an output light beam from the optical system. The light source is configured to emit one or more substantially parallel light beams. The zoom lens module is optically coupled to the light source and includes a converging lens and a tubular light spill shield. The converging lens is configured to receive the one or more substantially parallel light beams emitted by the light source and to emit a converging light beam. The tubular light spill shield has a back end adjacent to a front surface of the converging lens and a front end comprising an aperture. The aperture is located adjacent to a focus of the converging lens. The tubular light spill shield is configured to pass the converging light beam. The converging lens and the tubular light spill shield are fixedly coupled to the zoom lens module. The positive power optical device is configured to receive the converging light beam and to emit the output light beam from the optical system. The light source and the positive power optical device are mounted in fixed positions in the optical system and the zoom lens module is configured to move along an optical axis of the optical system between the light source and the positive power optical device.

In some such embodiments the zoom lens module further comprises one or more fly-eye lens arrays, each comprising a plurality of converging lenslets. A first fly-eye lens array of the one or more fly-eye lens arrays is configured to receive the one or more substantially parallel light beams emitted by the light source and a second fly-eye lens array of the one or more fly-eye lens arrays is configured to emit an integrated converging light beam to be received by the converging lens. The one or more fly-eye lens arrays are fixedly coupled to the zoom lens module.

In a second embodiment, a luminaire includes a head and power circuits configured to provide electrical power to electrical circuits of the head. The head includes a light source that is configured to emit one or more substantially parallel light beams. The head further includes a zoom lens module optically coupled to the light source. The zoom lens module includes a converging lens, configured to receive the one or more substantially parallel light beams emitted by the light source and to emit a converging light beam, and a tubular light spill shield having a back end adjacent to a front surface of the converging lens and a front end comprising an aperture. The aperture is located adjacent to a focus of the converging lens. The tubular light spill shield is configured to pass the converging light beam. The converging lens and the light spill shield are fixedly coupled to the zoom lens module. The head still further includes a positive power optical device configured to receive the converging light beam and to emit an output light beam from the head. The light source and the positive power optical device are mounted in fixed positions in the head and the zoom lens module is configured to move along an optical axis of the head between the light source and the positive power optical device.

### DETAILED DESCRIPTION

Preferred embodiments are illustrated in the figures, like numerals being used to refer to like and corresponding parts of the various drawings.

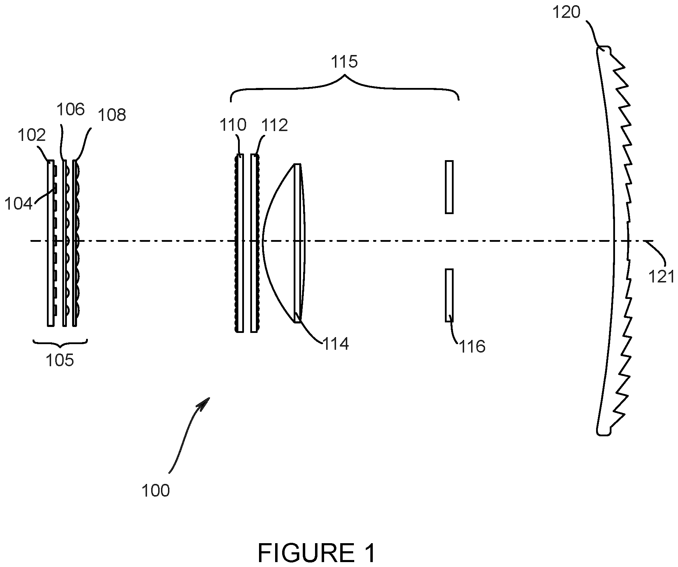

Figure 1 presents a schematic view of a first optical system 100 according to the disclosure. The optical system 100 is a wash light optical system. Light is emitted from a light engine 105. The light engine 105 comprises a plurality of LED emitters 104 mounted in an array on a substrate 102. The LED emitters 104 may be of a single color (such as white) or may be in a plurality of colors. In various embodiments, the LED emitters 104 may be configured to be controllable as a single group, as multiple groups, or individually. In some embodiments, one or more of the LED emitters 104 has a primary optical system comprising a reflector, a total internal reflection (TIR) lens, or other suitable optical device. In some embodiments, the light engine 105 may contain laser light sources rather than (or in combination with) the LED emitters 104. While the light engine 105 comprises a plurality of LED emitters 104, in other embodiments, the light engine 105 comprises a single light source that emits a single collimated (or substantially parallel) beam.

Each LED emitter 104 is associated with a corresponding pair of collimating lenslets on lens arrays 106 and 108. Each LED emitter 104 is optically coupled to and optically aligned with its corresponding collimating lenslet on the lens array 106. Each collimating lenslet on the lens array 106 is optically coupled to and optically aligned with its corresponding collimating lenslet on the lens array 108. That is, light from each of the LED emitters 104 passes first through its corresponding collimating lenslet on the lens array 106, and then through its corresponding collimating lenslet on the lens array 108.

Light rays of light beams from each LED emitter 104 and its collimating lenslets are substantially parallel (i.e., collimated). In some embodiments the term "substantially parallel" means that the half cone angle of light beams exiting the collimating lenslets on the lens array 108 is 10° (10 degrees) or less. In other embodiments, "substantially parallel" means that the half cone angle may be as low as 5° or as high as 20°. The LED emitters 104, the substrate 102, the collimating lens array 106 and the collimating lens array 108 may be assembled (or fixedly coupled) so as to form the light engine 105 as a unitary component.

Although the lens arrays 106 and 108 are shown in Figure 1 as two separate substrates, in other embodiments, the lens arrays 106 and 108 may be fabricated on opposite sides of a single (common) substrate. In still other embodiments, the lens arrays 106 and 108 and their substrate(s) may be molded from a material comprising glass or a transparent polymer. In still further embodiments, the lens arrays 106 and 108 may be fabricated from multiple individual collimating lenslets.

The collimated and substantially parallel light beams emitted by the LED light engine 105 pass through a zoom lens module 115. The zoom lens module 115 includes a converging lens 114, an aperture 116, and optional fly-eye lens arrays 110 and 112. The fly-eye lens arrays 110 and 112 may be referred to as homogenizing or integration lens arrays. Each of the fly-eye lens arrays 110 and 112 comprises a plurality of converging lenslets. The fly-eye lens array 110 (a first fly-eye lens array) is configured to receive the collimated and substantially parallel light beams emitted by the LED light engine 105. The fly-eye lens array 112 (a second fly-eye lens array) is configured to emit an integrated converging light beam to be received by a back surface of the converging lens 114.

The individual fly-eye lenses of the fly-eye lens arrays 110 and 112 are smaller in diameter than the individual lenslets of the lens arrays 106 and 108. Each collimated and substantially parallel light beam emitted by a lenslet illuminates a plurality of fly-eye lenses. Some fly-eye lenses may be illuminated by light beams from a plurality of adjacent lenslets. The lenslets of the lens arrays 106 and 108 may be separated from each other on their substrates. In contrast, the lenses of a fly-eye lens array are tightly packed together with little or no flat substrate between them. Such lenses may be hexagonal, in order to pack tightly in an hexagonal array.

The fly-eye lens arrays 110 and 112 are configured, along with converging lens 114, such that the beam originating from each individual LED emitter 104 illuminates the aperture 116 (or gate) of the optical system 100. Individual beams from the LED emitters 104 overlap in the aperture 116 before passing through further optical devices. The overlapping beams form an even, soft-edged beam. The aperture 116 may be a physical device (e.g., the aperture 116 as shown in Figure 1) or may be 'virtual' (i.e., a narrow region of the optical system where the beams from the LED emitters 104 overlap). The converging lens 114, the aperture 116, and the optional fly-eye lens arrays 110 and 112 are fixedly coupled to each other to form the zoom lens module 115 as a unitary component, which moves relative to the LED light engine 105 and an output lens 120, as described in more detail below.

The optional fly-eye lens arrays 110 and 112 and the converging lens 114 are configured to overlap the individual light beams from the LED emitters 104 onto the aperture 116. This overlap is configured to more fully integrate brightness variations between the light beams, homogenize colors of the light beams, and produce a combined light beam with a smoother illumination profile and a more fully homogenized color at the aperture 116.

Although the fly-eye lens arrays 110 and 112 are shown in Figure 1 as fabricated on two separate substrates, in other embodiments, the fly-eye lens arrays 110 and 112 may be fabricated on opposite sides of a single (common) substrate. In still other embodiments, the fly-eye lens arrays 110 and 112 and their substrate(s) may be molded from a material comprising glass or a transparent polymer. In still further embodiments, the fly-eye lens arrays 110 and 112 may be fabricated from multiple individual collimating lenslets.

The light beam that exits the aperture 116 (an output light beam) is a diverging beam that passes through (and is collimated by) the output lens 120. The output lens 120 of the optical system 100 is a single Fresnel lens. In other embodiments, the output lens 120 may be a group of lenses, a pebble convex lens, a standard planoconvex lens, a searchlight-style reflector system, or other positive power optical device.

As described above, both the light engine 105 and the output lens 120 are mounted in fixed positions within the optical system 100, however the zoom lens module 115 is configured to move along an optical axis 121 between the light engine 105 and the output lens 120. Because the light beams emitting from light engine 105 are substantially parallel, the position of the zoom lens module 115 relative to, and its distance from, the light engine 105 does not substantially alter the character of the lights beam entering the zoom lens module 115. As such, as the zoom lens module 115 moves along the optical axis 121, it receives substantially the same light beams emitted by the light engine 105.

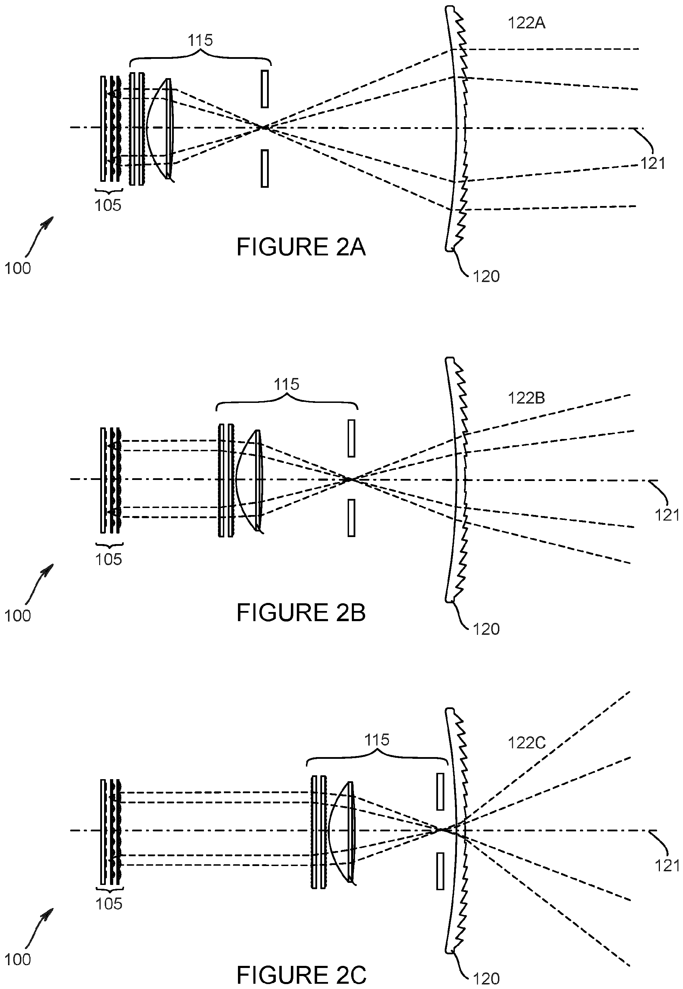

Figures 2A, 2B, and 2C present schematic views illustrating the zoom functionality of the optical system 100 of Figure 1. Figure 2A shows the optical system 100 in a first configuration, where the zoom lens module 115 is positioned close to the light engine 105. In the first configuration, a light beam 122A emitted by the output lens 120 has a narrow beam angle. In some embodiments, this narrow beam angle will be between 5° and 10°. Figure 2B shows the optical system 100 in a second configuration, where the zoom lens module 115 is positioned in an intermediate position between the light engine 105 and the output lens 120. In the second configuration, a light beam 122B emitted by the output lens 120 has an intermediate beam angle. Finally, Figure 2C shows the optical system 100 in a third configuration, where the zoom lens module 115 is close to the output lens 120. In the third configuration, a light beam 122C emitted by the output lens 120 has a wide beam angle. In some embodiments this wide beam angle will be between 50° and 60°. As discussed above, in all three configurations, because the light emitted from the light engine 105 is substantially parallel, it enters the zoom lens module 115 substantially unchanged as the zoom lens module 115 moves along the optical axis 121.

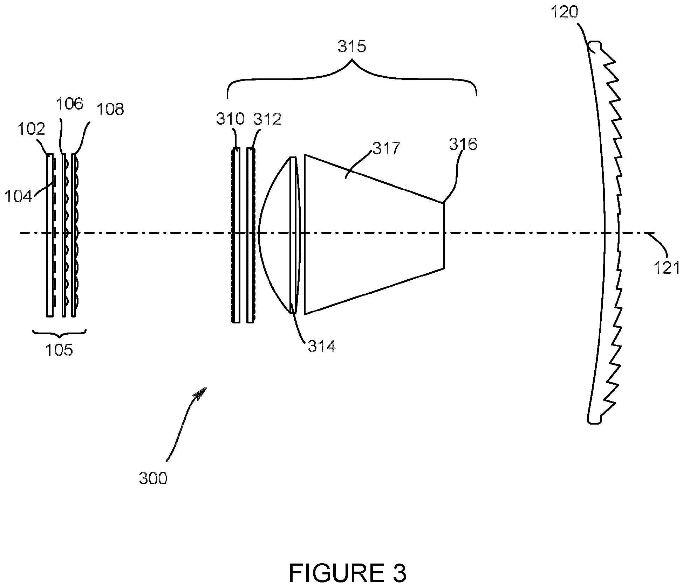

Figure 3 presents a second optical system 300 according to the disclosure. The optical system 300 includes the light engine 105 and the output lens 120 of the optical system 100, as well as a zoom lens module 315. The zoom lens module 315 includes a converging lens 314 and optional fly-eye lens arrays 310 and 312, similar to those described for the optical system 100.

The zoom lens module 315 further includes a tubular light spill shield 317. The tubular light spill shield 317 is a hollow tubular structure that tapers from a back end adjacent to a front surface of the converging lens 314 down to a front end containing, or forming, the aperture 316. The tubular light spill shield 317 has an axis that is coaxial with (or extends parallel to) the optical axis 121. The light shield 317 is configured to pass a light beam emitted from the converging lens 314.

In some embodiments, the tubular light spill shield 317 may have a black or matte internal surface, so as to inhibit reflection of stray light beams. In other embodiments, the light shield 317 may have a reflective, specular, or non-specular, internal surface so as to capture and redirect stray light beams. The tubular light spill shield 317 is fixedly coupled to the other components of, and moves with, the zoom lens module 315. In some embodiments a diffuser is mounted in the aperture 316, to further homogenize a light beam emitted by the converging lens 314.

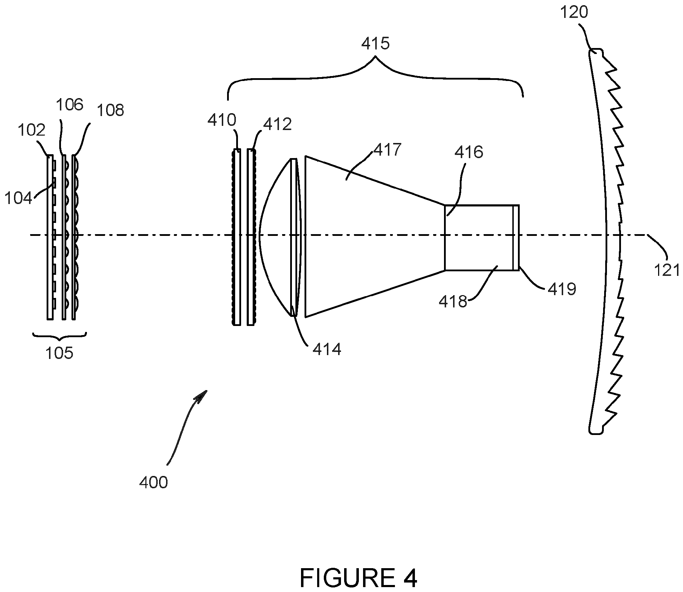

Figure 4 presents a third optical system 400 according to the disclosure. The optical system 400 includes the light engine 105 and the output lens 120 of the optical system 100, as well as a zoom lens module 415. The zoom lens module 415 includes a converging lens 414 and optional fly-eye lens arrays 410 and 412, similar to those described for the optical systems 100 and 300. The zoom lens module 415 further includes a tubular light spill shield 417 and an aperture 416 similar to those described for the optical system 300, as well as a light mixing chamber 418 and a diffuser 419. The light mixing chamber 418 is coupled at a first end to the aperture 416. The light mixing chamber 418 is a hollow tubular structure of any cross-sectional shape that may be straight or may taper. An internal surface of the light mixing chamber 418 may be reflective, either specular or non-specular, and operate to further homogenize an intensity profile and/or color of a light beam emitted by the aperture 416. A second end of the light mixing chamber 418 includes the diffuser 419, which further aids in homogenization of a mixed converging light beam emitted by the light mixing chamber 418. A homogenized converging light beam emitted by the diffuser 419 illuminates the output lens 120. The light mixing chamber 418 and the diffuser 419 are fixedly coupled to, and move with the other components of, the zoom lens module 415.

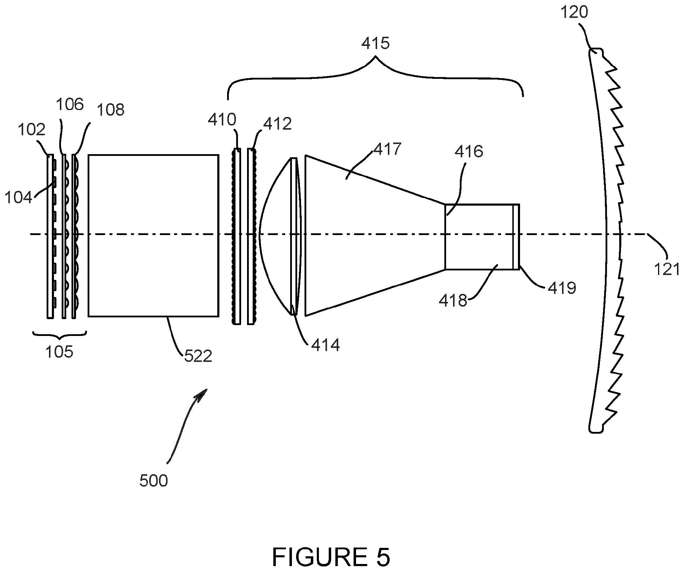

Figure 5 presents a fourth optical system 500 according to the disclosure. The optical system 500 includes the light engine 105 and the output lens 120 of the optical system 100, as well as the zoom lens module 415 of the optical system 400. The optical system 500 further includes a tubular light baffle 522. The tubular light baffle 522 is a hollow tubular structure of any cross-sectional shape that may be straight or may taper and has an axis that extends parallel to the optical axis 121. The internal surface of tubular light baffle 522 may be reflective, either specular or non-specular, so as to reflect and capture stray light emitted from the light engine 105 towards the zoom lens module 415. The substantially parallel light beams emitted from the light engine 105 pass through hollow tubular light baffle 522 unobstructed. In some embodiments, the tubular light baffle 522 is fixedly coupled to the other components of, and moves with, the zoom lens module 415. In other embodiments, the tubular light baffle 522 is fixedly coupled to the other components of the light engine 105 and does not move. In still other embodiments, the tubular light baffle 522 comprises a plurality of nesting, telescoping tubes that extend or contract in length as the zoom lens module 415 moves along the optical axis 121. In such embodiments, a first end of the tubular light baffle 522 is fixedly coupled to the light engine 105 and a second end of the tubular light baffle 522 is fixedly coupled to the zoom lens module 415.

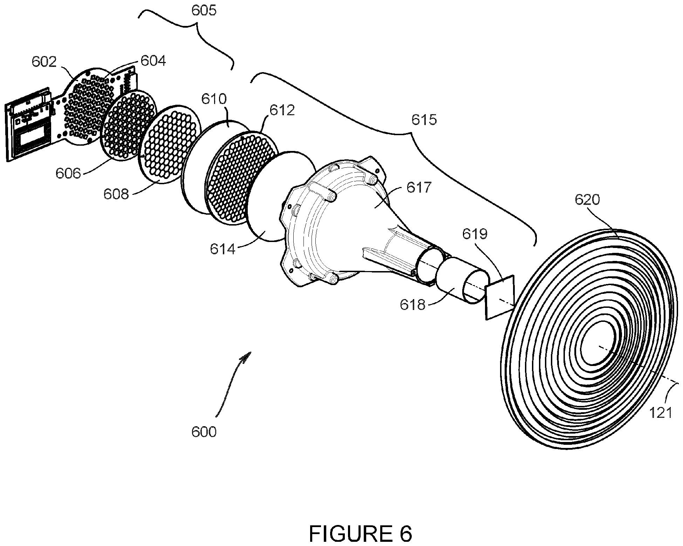

Figure 6 presents an exploded diagram of a fifth optical system 600 according to the disclosure. The optical system 600 includes a light engine 605 that comprises LED emitters 604 on a substrate 602. The optical system 600 further includes lens arrays 606 and 608 and a zoom lens module 615. The zoom lens module 615 comprises fly-eye lens arrays 610 and 612, a converging lens 614, a tubular light spill shield 617, a light mixing chamber 618, a diffuser 619, and an output lens 620. The diffuser 619 emits a diverging light beam that passes through (and is collimated by) the output lens 620. The components of the optical system 600 function in similar ways to corresponding components of the optical systems 100, 300, 400, and 500.

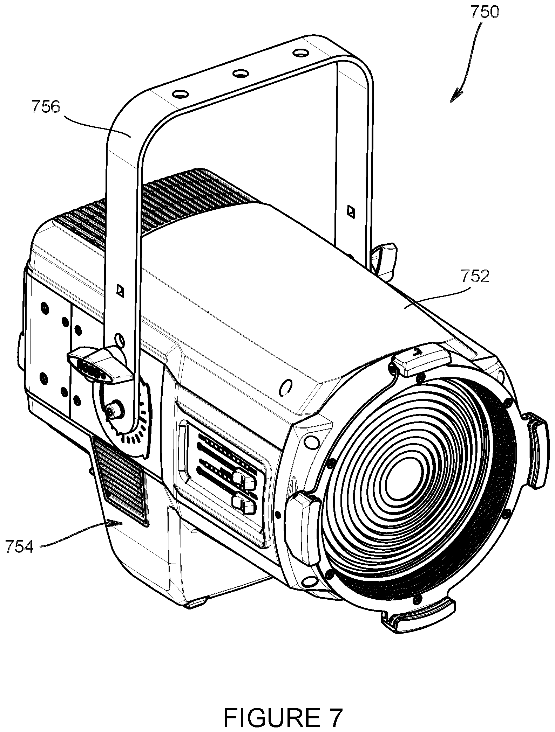

Figure 7 presents a view of a luminaire 750 according to the disclosure. The luminaire 750 comprises a head 752, in which is mounted an optical system according to the disclosure (e.g., the optical system 600). Also mounted in the head 752 are electrical circuits 754 (not visible in Figure 7). The electrical circuits 754 are configured to provide electrical power to the light engine 605 and to control circuits and motors configured to move the zoom lens module 615. The luminaire 750 is a fixed position luminaire whose pan/tilt orientation is set by manually positioning the head 752 in a stirrup 756.

In other embodiments, a luminaire comprises a head in which is mounted an optical system according to the disclosure. In such embodiments, the head is rotatably mounted in a motorized yoke assembly and configured for remotely controlled rotation about a tilt axis. The yoke assembly is rotatably mounted to a base and configured for remotely controlled rotation about a pan axis. In some such embodiments, the base may include power circuits configured to provide electrical power to electrical circuits of one or more of the base, the yoke assembly, and the head.

While only some embodiments of the disclosure have been described herein, those skilled in the art, having benefit of this disclosure, will appreciate that other embodiments may be devised which do not depart from the scope of the disclosure. While the disclosure has been described in detail, it should be understood that various changes, substitutions and alterations can be made hereto without departing from the spirit and scope of the disclosure.

## Claims

1. An optical system comprising:
a light source (104,105), configured to emit one or more substantially parallel light beams;
a zoom lens module (315) optically coupled to the light source, the zoom lens module comprising:
a converging lens (314), configured to receive the one or more substantially parallel light beams emitted by the light source and to emit a converging light beam; and
a tubular light spill shield (317) having a back end adjacent to a front surface of the converging lens and a front end comprising an aperture (316), the aperture located adjacent to a focus of the converging lens, the tubular light spill shield configured to pass the converging light beam,
wherein the converging lens and the tubular light spill shield are fixedly coupled to the zoom lens module; and
a positive power optical device (120) configured to receive the converging light beam and to emit an output light beam (122) from the optical system,
wherein the light source and the positive power optical device are mounted in fixed positions in the optical system and the zoom lens module is configured to move along an optical axis (121) of the optical system between the light source and the positive power optical device.

2. The optical system of claim 1, wherein the zoom lens module further comprises:
one or more fly-eye lens arrays (110,112), each comprising a plurality of converging lenslets, wherein:
a first fly-eye lens array of the one or more fly-eye lens arrays is configured to receive the one or more substantially parallel light beams emitted by the light source and a second fly-eye lens array of the one or more fly-eye lens arrays is configured to emit an integrated converging light beam to be received by the converging lens; and
the one or more fly-eye lens arrays are fixedly coupled to the zoom lens module.

3. The optical system of claim 1, wherein the aperture of the tubular light spill shield comprises a first diffuser.

4. The optical system of claim 1, wherein the tubular light spill shield comprises a black internal surface.

5. The optical system of claim 1, further comprising a light mixing chamber (418) fixedly coupled to the zoom lens module and configured to receive the converging light beam emitted from the aperture of the tubular light spill shield and to emit a mixed converging light beam.

6. The optical system of claim 5, further comprising a second diffuser (419), fixedly coupled to the zoom lens module and configured to receive the mixed converging light beam and to emit a homogenized converging light beam to be received by the positive power optical device.

7. The optical system of claim 1, further comprising a tubular light baffle (522) having a back end located adjacent to the light source and a front end located adjacent to a back surface of the converging lens, the tubular light baffle configured to pass the substantially parallel light beams emitted by the light source.

8. The optical system of claim 7, wherein the tubular light baffle comprises a reflective internal surface configured to reflect and capture stray light emitted from the light source.

9. The optical system of claim 7, wherein a first end of the tubular light baffle is fixedly coupled to the light source, a second end of the tubular light baffle is fixedly coupled to the zoom lens module, and the tubular light baffle comprises a plurality of nesting, telescoping tubes that extend or contract in length as the zoom lens module moves away or toward the light source.

10. A luminaire (750) comprising:
a head (752) comprising the optical system of any of claims 1-9; and
power circuits configured to provide electrical power to electrical circuits of the head.

11. The luminaire of claim 10, further comprising:
a yoke assembly, wherein the head is rotatably mounted in the yoke assembly for rotation about a tilt axis.

12. The luminaire of claim 11, further comprising:
a base, wherein the yoke assembly is rotatably mounted to the base for rotation about a pan axis.
